# EUROPÄISCHE PATENTSCHRIFT

(11) **EP 2 529 134 B1**
(45) Veröffentlichungstag und Bekanntmachung des Hinweises auf die Patenterteilung: **16.12.2015**
(21) Anmeldenummer: 11701240.1
(22) Anmeldetag: 20.01.2011
(51) Int. Cl.: F16J 15/00, F16J 15/32, F16J 15/34, F16J 15/44, F16L 27/093

(54) **ROTATIONSDICHTUNGSANORDNUNG**
ROTARY SEAL ARRANGEMENT
ENSEMBLE JOINT D'ÉTANCHÉITÉ ROTATIF

(30) Priorität: 28.01.2010 DE 102010001345
(43) Veröffentlichungstag der Anmeldung: 05.12.2012
(73) Patentinhaber: Trelleborg Sealing Solutions Germany GmbH, 70565 Stuttgart (DE)
(72) Erfinder: JORDAN, Holger, 73765 Neuhausen auf den Fildern (DE)
(74) Vertreter: Kohler Schmid Möbus Patentanwälte
(86) Internationale Anmeldenummer: PCT/EP2011/050769
(87) Internationale Veröffentlichungsnummer: WO 2011/092111

(56) Entgegenhaltungen:
- EP-A1- 1 731 804
- DE-A1- 3 502 799
- DE-A1- 3 526 731
- DE-A1-102007 062 470
- GB-A- 2 140 101
- US-A1- 2003 178 790

## Beschreibung

Die Erfindung betrifft eine Drehdurchführung mit einem rotierbar gelagerten Maschinenteil und einem für das rotierbar gelagerte Maschinenteil eine Lagerung ausbildenden Maschinenteil, wobei ein erstes der Maschinenteile eine Dichtungsaufnahmestruktur ausbildet, und das zweite der Maschinenteile eine eine Dichtfläche ausbildende Oberfläche aufweist, und mindestens einer in der Dichtungsaufnahmestruktur angeordneten Rotationsdichtung. Mittels der Rotationsdichtung wird dabei ein Hochdruckbereich gegen einen Niederdruckbereich zwischen den Maschinenteilen abgedichtet.

Der Hochdruckbereich wird von einem Drehdurchführungsbereich zwischen den beiden Maschinenteilen ausgebildet. Dabei wird die Rotationsdichtung auch als Drehdurchführungsdichtung bezeichnet. Die Drehdurchführung ermöglicht Fluiden, d.h. Gasen oder Flüssigkeiten, einen abgedichteten Übergang zwischen einem feststehenden Maschinenteil und einem rotierenden Maschinenteil. Üblicherweise ist das erste Maschinenteil mit der Dichtungsaufnahmestruktur als das feststehende Maschinenteil ausgeführt und das zweite Maschinenteil ist als eine darin rotierbar gelagerte Welle ausgebildet. Derartige Drehdurchführungen werden zum Beispiel bei Hydraulikanwendungen oder zum Eintragen von heißem Gas zum Beheizen einer Walze eingesetzt.

Bekannte Drehdurchführungsdichtungen sind zum Beispiel als ein Gleitring (Gleitringdichtung) ausgebildet, wobei der Gleitring üblicherweise einen aus Polytetrafluorethylen (PTFE) hergestellten Dichtring aufweist.

Ein Beispiel einer derartigen Drehdurchführungsdichtung ist in der DE 10 2007 062 470 A1 beschrieben. Eine Drehdurchführungsdichtung wird dabei derart ausgelegt, dass möglichst wenig des unter einem Überdruck stehenden Fluids vom Drehdurchführungsbereich in den Niederdruckbereich gelangt, d.h. dass eine geringe Leckage vorhanden ist. Je geringer die Lackage ist, desto größer ist jedoch die zwischen der Dichtfläche des rotierbar gelagerten Maschinenteils und der Drehdurchführungsdichtung auftretende Reibungskraft. Der Verschleiß der Drehdurchführungsdichtung wird entsprechend erhöht und es wird relativ viel Antriebsenergie gegen die genannte Reibungskraft aufgewendet. Insbesondere bei mit hohen Drehzahlen rotierenden Wellen und bei unter hohem Druck stehenden Fluiden ist die Lebensdauer einer derartigen bekannten Drehdurchführungsdichtung deshalb gering.

Weiter muss ein Mitdrehen der Rotationsdichtung mit der Welle vermieden werden. Dazu wird der Dichtring häufig in ein z.B. aus Stahl gefertigtes ebenfalls ringförmiges Halteelement eingepresst. Das Halteelement wird verdrehungssteif in der Dichtungsaufnahmestruktur montiert. Eine derartige Drehdurchführungsdichtung ist jedoch relativ aufwändig herzustellen. Zur verdrehungssteifen Montage muss eine Verdrehsicherung an der Dichtungsaufnahmestruktur vorgesehen sein und/oder das Halteelement muss fest in die Dichtungsaufnahmestruktur eingepresst sein. Eine Montage in einer einfachen Nut als Dichtungsaufnahmestruktur ist aufgrund der Starrheit des Halteelements nicht möglich. Eine Drehdurchführung mit einem solchen Halteelement ist beispielsweise aus der DE 35 02 799 A1 bekannt geworden.

Der Erfindung liegt die Aufgabe zugrunde, eine auch als Rotationsdirchtungsanordnung bezeichnete Drehdurchführung bereitzustellen, bei der die Rotationsdichtung zwischen den Maschinenteilen auf einfache Weise montiert werden kann und bei der ein Mitdrehen des Dichtringes der Rotationsdichtung zuverlässig vermieden werden soll.

Diese Aufgabe wird durch eine Drehdurchführung mit den in Patentanspruch 1 angegebenen Merkmalen gelöst. Die abhängigen Ansprüche stellen bevorzugte Ausführungsformen der Erfindung dar.

Eine erfindungsgemäße Drehdurchführung weist ein rotierbar gelagertes Maschinenteil und ein für das rotierbar gelagerte Maschinenteil eine Lagerung ausbildendes Maschinenteil auf, wobei ein erstes der Maschinenteile eine Dichtungsaufnahmestruktur ausbildet, und das zweite der Maschinenteile eine eine Dichtfläche ausbildende Oberfläche aufweist. Es ist mindestens eine in der Dichtungsaufnahmestruktur angeordnete Rotationsdichtung zur Abdichtung eines Hochdruckbereichs gegen einen Niederdruckbereich zwischen den Maschinenteilen vorgesehen. Der Hochdruckbereich steht relativ zum Druck des Niederdruckbereichs zumindest zeitweise unter Überdruck. Dabei ist der Hochdruckbereich von einem Drehdurchführungsbereich ausgebildet, wobei durch den Drehdurchführungsbereich ein, gegenüber dem Niederdruckbereich unter einem Überdruck stehendes Fluid von einem der Maschinenteile durch die Dichtfläche in das andere der Maschinenteile einleitbar ist. D.h. die beiden Maschinenteile bilden zusammen eine Drehdurchführung aus und die Rotationsdichtung ist als Drehdurchführungsdichtung zwischen den Maschinenteilen angeordnet. Der Drehdurchführungsbereich bildet den, relativ zum Druck des Niederdruckbereichs zumindest zeitweise unter Überdruck stehenden Hochdruckbereich aus.

Erfindungsgemäß weist die Rotationsdichtung ein im Wesentlichen steifes und im Wesentlichen lagestabil zum ersten Maschinenteil angeordnetes Stützelement, einen gummielastisch verformbaren, sich an das Stützetement hochdruckbereichseitig anschließenden Anlagekörper, und einen eine Dichtkante aufweisenden und an den Anlagekörper lose anliegenden Dichtring auf.

Der Dichtring weist zu beiden Seiten der Dichtkante jeweils eine Breitseite auf und weist einen dichtkantenabgewandten Dichtungssitzkantenbereich auf. Die Breitseiten sind über den Dichtungssitzkantenbereich miteinander verbunden und der Anlagekörper ist zumindest teilweise zwischen einer der Breitseiten des Dichtringes und dem Stützelement angeordnet.

Wenn die Dichtfläche als Zylindermantelfläche, also z.B. als die Manteloberfläche einer rotierenden Welle, ausgebildet ist, ist der Anlagekörper in axialer Richtung, also der Rotationsachsenrichtung, des rotierbar gelagerten Maschinenteils zwischen dem Stützelement und dem Dichtring angeordnet. Der Anlagekörper muss dabei nicht vollständig zwischen dem Stützelement und dem Dichtring angeordnet sein. Er kann sich auch über diesen Bereich hinaus erstrecken. Unter "lose anliegend" wird dabei verstanden, dass der Dichtring nicht einstückig mit dem Anlagekörper ausgebildet ist. Der Dichtring kann durch die Bauart der Rotationsdichtung an den Anlagekörper angepresst sein, so dass seine relative

Lage zum Anlagekörper durch zwischen dem Dichtring und dem Anlagekörper auftretende Reibungskräfte fixiert ist. Der Dichtring muss nicht dauerhaft am Anlagekörper anliegen. Er kann lediglich in einem Zeitbereich in dem ein, über einen durch die Bauart der Rotationsdichtung festgelegten bestimmten Grenzwert liegender, Hochdruck im Hochdruckbereich anliegt am Anlagekörper anliegen, d.h. vom Hochdruck an den Anlagekörper angepresst werden. Das Stützelement verläuft zumindest in einem Abstützbereich schräg zur axialen Richtung des rotierbar gelagerten Maschinenteils, derart, dass der Dichtring in dem Abstützbereich durch den Anlagekörper von der Dichtfläche weg gedrückt wird. D.h. der Anlagekörper ist so ausgeformt, dass der Dichtring mit der Dichtkante gegen innere elastische Kräfte des Anlagekörpers in Richtung der Dichtfläche gedrückt wird, wenn der Anlagekörper, z.B. durch einen anliegenden Überdruck relativ zum Niederdruckbereich, von seiner dichtringseitigen Seite aus zusammengedrückt wird. Es können so die an einer Drehdurchführungsdichtung wirkenden Reibungskräfte zwischen der Dichtfläche des rotierbär gelagerten Maschinenteils und der Drehdurchführungsdichtung besonders gut vermindert werden. Es kann so erreicht werden, dass in einem überdrucklosen Zustand, oder einem Zustand mit einem unter einem Schwellenwert liegenden Druck, im Drehdurchführungsbereich die Dichtkante im Wesentlichen ohne Anpresskraft an der Dichtfläche anliegt oder von der Dichtfläche beabstandet ist. In einem Überdruckzustand, bzw. einem Zustand mit einem Druck über dem Schwellenwert, im Drehdurchführungsbereich dagegen liegt die Dichtkante dabei dichtend an der Dichtfläche an, da dann durch das unter Druck stehende Fluid eine Kraftkomponente auf den Dichtring ausgeübt wird die gegen das Wegdrücken durch den Anlagekörper wirkt. Es wird also nur dann eine erhöhte Dichtwirkung durch die anliegende Dichtlippe bewirkt, wenn ein relativ hoher Druck im Drehdurchführungsbereich anliegt, also wenn das im Drehdurchführungsbereich anstehende Fluid unter einem relativ hohen Druck steht. Da bei sehr vielen Anwendungen von Drehdurchführung das Fluid nur zeitweise unter hohem Druck steht, bzw. nur zeitweise mit einem besonders hohen Druck beaufschlagt wird, wird so eine geringe Reibung der Rotationsdichtung bei einer geringen Leckage erreicht. Zum Beispiel wird im Falle eines heißen Gases als Fluid, das zum Erhitzen einer Walze verwendet wird, die Dichtkante nur dann stark an die Sichtfläche gedrückt, wenn das heiße Gas mit hohem Druck in die Walze gepresst wird, um die Walze z.B. temporär zu erhitzen. Nur in einem derartigen Aufheizzeitbereich wird eine Rotation der Walze durch die dann an die Dichtfläche angedrückte Dichtkante nennenswert abgebremst. Wird gerade kein heißes Gas eingepresst, da z.B. die Betriebstemperatur der Walze erreicht ist, sinkt der Druck des Fluids im Drehdurchführungsbereich und die Dichtkante hebt z.B. von der Dichtfläche ab, da der Dichtring von der Dichtfläche durch den insbesondere elastisch vorgespannten und/oder verpressten Anlagekörper weg gedrückt wird.

Durch das zumindest zeitweise Anpressen des Dichtrings an den gummieleastischen Anlagekörper wird die relative Lage des Dichtrings zum Anlagekörper durch zwischen dem Dichtring und dem Anlagekörper auftretende Reibungskräfte fixiert. Der Anlagekörper wird gleichermaßen an das Stützelement gedrückt und/oder kann mit dem Stützelement einstückig ausgeführt sein. Ein Mitdrehen des Dichtrings mit dem rotierbar gelagerten Maschinenteil wird so zuverlässig vermieden.

Eine einfache Montage der Rotationsdichtung ist insbesondere möglich, wenn das Stützelement einstückig mit dem ersten Maschinenteil als Teil der Dichtungsaufnahmestruktur ausgebildet ist. Die Dichtungsaufnahmestruktur kann dabei als Ringnut ausgebildet sein. Da dann kein zusätzliches starres Stützelement vorgesehen sein muss können der Dichtring und, wenn nicht einstückig mit dem Stützelement ausgeführt, der Anlagekörper einfach als elastisch verformbare Teile in die Dichtungsaufnahmestruktur eingelegt bzw. eingespannt werden.

Die Drehdurchführung ist also. Teil einer Druckversorgung eines Druckspeichers der je nach Bedarf hinsichtlich seines Druckes geregelt und/oder eingestellt werden kann.

Bevorzugt weist der Anlagekörper einen sich hochdruckbereichseitig in axialer Richtung des rotierbar gelagerten Maschinenteils an den Dichtring anschließenden Bereich auf. Dadurch ist der radial von der Dichtfläche abgewandte Rand des Dichtrings, also der Dichtungssitzkantenbereich, in einer Ausnehmung des Anlagekörpers angeordnet. Dieser Rand bildet dann eine Art Drehpunkt aus um den der Dichtring bei wechselnden relativen Druckdifferenzen zwischen Hochdruckbereich und Niederdruckbereich mehr oder weniger verkippen kann, so dass sich die Kraft mit der die Dichtkante auf die Dichtfläche gedrückt wird dynamisch anpassen kann.

Wenn der Dichtring einen konkav zum Drehdurchführungsbereich abgewinkelten Querschnitt aufweist, kann besonders gut eine die Dichtkante auf die dichtfläche drückende Kraft gegen die inneren elastischen Kräfte des Anlagekörpers vom zumindest zeitweise im Drehdurchführungsbereich herrschenden Überdruck des Fluids erzeugt werden. Dabei wird der Drehdurchführungsbereich vom Dichtring und der Dichtfläche derart eingegrenzt, dass zwischen der drehdurchführungsbereichseitigen Oberfläche des Dichtrings und der Dichtfläche ein stumpfer Winkel besteht.

Das Stützelement kann aus einem steifen Kunststoff oder aus Metall, bevorzugt aus Stahl, gefertigt sein. Der Dichtring ist erfindungsgemäß aus PTFE also Polytetrafluorethylen, gefertigt. Verschleißfeste, gummielastische Materialien, wie FKM (flourierter Kautschuk) oder HNBR (gummielastische Werkstoffe) können auch als Materialien für den Dichtring verwendet werden. Der Anlagekörper ist bevorzugt aus einem Elastomer gefertigt. Dabei ist wichtig, dass er ein gummielastisches Federverhalten aufweist.

Wenn zwei Rotationsdichtungen bevorzugt spiegelsymmetrisch um den, bzw. einen, Drehdurchführungsbereich herum angeordnet sind, wird der Drehdurchführungsbereich beidseitig sicher abgedichtet.

Die Erfindung wird nachfolgend anhand von Ausführungsbeispielen unter Bezugnahme auf die Zeichnungen näher erläutert. In den Zeichnungen ist jeweils ein axial zum rotierbar gelagerten Maschinenteil geführtes Schnittbild dargestellt, wobei jeweils nur eine obere Hälfte der Dichtungsanordnung gezeigt ist.

Die Figuren 1a und 1b zeigen eine bevorzugte Ausführungsform einer erfindungsgemäßen Drehdurchführung.

Die Figur 2 zeigt eine weitere Ausführungsform einer erfindungsgemäßen Drehdurchführung.

Die Figur 3 zeigt eine Ausführungsform einer erfindungsgemäßen Drehdurchführung in einer Stirnseite eines rotierbar gelagerten Maschinenteils.

Die Figuren 4a bis 4f zeigen Ausführungsformen von Rotationsdichtungen einer erfindungsgemäßen Drehdurchführung.

Die Figur 5 zeigt eine Ausführungsform eines Anlagekörpers einer erfindungsgemäßen Drehdurchführung.

Die Darstellungen der Zeichnungen zeigen den erfindungsgemäßen Gegenstand stark schematisiert und sind nicht maßstäblich zu verstehen. Die einzelnen Bestandteile des erfindungsgemäßen Gegenstandes sind so dargestellt, dass ihr Aufbau gut gezeigt werden kann.

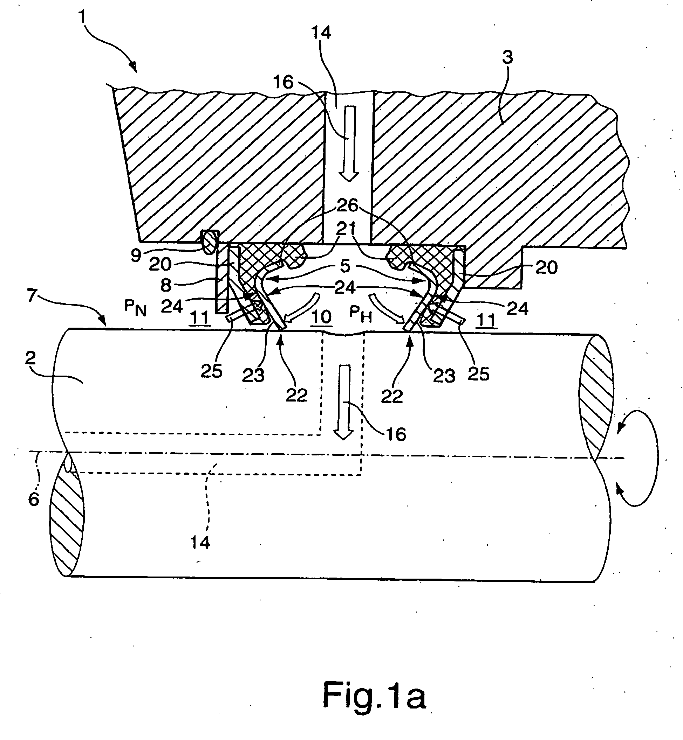

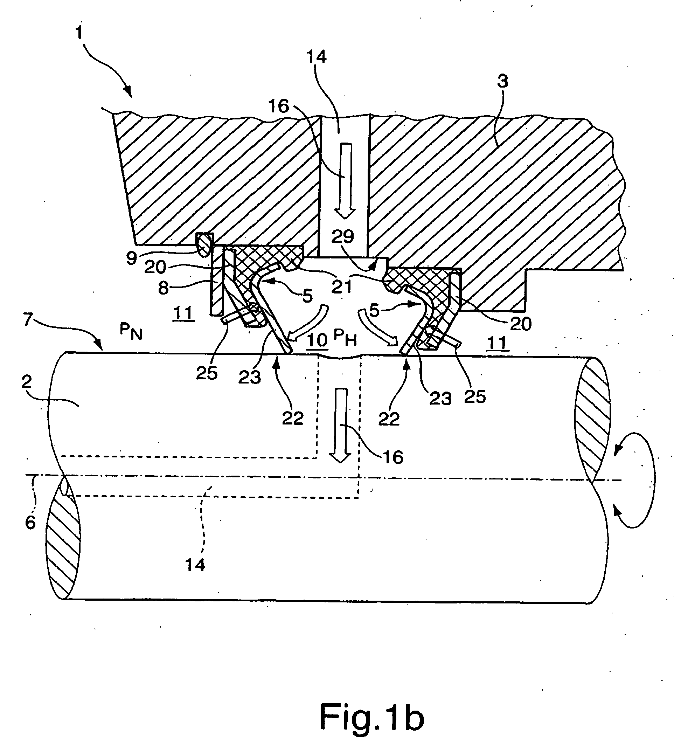

In den Figuren 1a und 1b ist eine bevorzugte Ausführungsform einer erfindungsgemäßen Rotationsdichtungsanordnung 1 in einem Querschnitt dargestellt. Zwischen einem rotierbar gelagerten Maschinenteil 2 (Welle) und einem für das rotierbar gelagerte Maschinenteil 2 eine Lagerung ausbildenden Maschinenteil 3 sind Rotationsdichtungen 5 montiert. Die Rotationsdichtungen weisen also eine ringförmige zum Ringmittelpunkt symmetrische Form auf. Die Rotierbarkeit der Welle ist in der Figur durch einen gebogenen Doppelpfeil symbolisch dargestellt. Das zweite Maschinenteil 2 ist als eine im ersten Maschinenteil 3 gelagerte Radialwelle ausgebildet, wobei die Rotationsdichtungen 5 ringförmig ausgebildet sind und um die Radialwelle angeordnet sind. Die Rotationssymmetrieachse 6 der Rotationsdichtungen 5 fällt mit der Rotationsachse der Radialwelle zusammen.

Alternativ kann sich auch das Maschinenteil 3 um das Maschinenteil 2 drehen.

Die Rotationsdichtungen 5 sind in einer vom ersten der Maschinenteile 3 ausgebildeten Dichtungsaufnahmestruktur eingelegt. Die Dichtungsaufnahmestruktur muss dabei nicht wie in der Figur gezeigt durch eine spezielle Innenoberflächenausformung des ersten, also feststehenden Maschinenteils 3, ausgeformt sein. Unter Dichtungsaufnahmestruktur kann auch lediglich ein nicht weiter spezifizierter Oberflächenbereich gemeint sein, an dem eine Rotationdichtung positioniert ist. Das zweite der Maschinenteile 2, also im dargestellten Fall die Radialwelle, weist eine eine Dichtfläche 7 ausbildende Oberfläche auf, die als Zylindermantelfläche ausgeformt ist. Der Sitz der Rotationsdichtungen 5 ist durch eine Scheibe 8 gesichert, die wiederum mittels eines in eine Nut eingreifenden Federrings 9 fixiert ist.

Mittels der Rotationsdichtungen 5 wird ein als Drehdurchführungsbereich ausgebildeter Hochdruckbereich 10 gegen einen Niederdruckbereich 11 zwischen den Maschinenteilen 2,3 abgedichtet. Durch den Drehdurchführungsbereich 10 ist ein, gegenüber dem Niederdruckbereich 11 mit dem Niederdruck P_{N} unter einem Überdruck stehendes Fluid vom feststehenden Maschinenteil 3 durch die Dichtfläche 7 in das rotierbare Maschinenteil 3 einleitbar. Der Niederdruck P_{N} kann z.B. der atmosphärische Normaldruck sein. Dazu ist im feststehenden Maschinenteil 3 eine Bohrung 14 vorgesehen, die in den Drehdurchführungsbereich 10 einmündet. Auch der rotierbare Maschinenteil 2 weist Bohrungen 14 auf, die in den Drehdurchführungsbereich 10 einmünden und den Drehdurchführungsbereich 10 zur Durchführung des Fluids mit einem Wellenende des rotierbaren Maschinenteils 2 verbindet. Durch die Bohrungen 14 kann also das Fluid vom feststehenden Maschinenteil 3 in den rotierbaren Maschinenteil 2 eingeleitet werden, was in der Figur durch Pfeile 16 symbolisch dargestellt ist. Das Fluid kann bei Bedarf auch gegen die Pfeilrichtung der Pfeile 16 strömen.

Es sind zwei Rotationsdichtungen 5 spiegelsymmetrisch um den Hochdruckbereich 10, bzw. den Drehdurchführungsbereich, herum angeordnet. Jede der Rotationsdichtungen 5 weist ein im Wesentlichen steifes und im Wesentlichen lagestabil zum ersten Maschinenteil 3 angeordnetes Stützelement 20, einen gummielastisch verformbaren, sich an das Stützelement 20 drehdurchführungsbereichseitig anschließenden Anlagekörper21, und einen eine Dichtkante 22 aufweisenden und an den Anlagekörper 21 lose anliegenden Dichtring 23 auf.
Jeder der Dichtringe 23 weist zu beiden Seiten seiner Dichtkante 22 jeweils eine Breitseite 24 auf und weist einen dichtkantenabgewandten Dichtungssitzkantenbereich 26 auf. Die Breitseiten 24 jedes Dichtringes 23sind über den jeweiligen Dichtungssitzkantenbereich 26 miteinander verbunden und der Anlagekörper 21 ist jeweils zwischen einer der Breitseiten 24 des jeweiligen Dichtringes 23 und dem zugehörigen Stützelement 20 angeordnet. Die Breitseiten 24 bilden Oberflächenbereiche aus an die zumindest auf einer der Seiten der Dichtkante 22 eine ausreichende Angriffsfläche für das im Hochdruckbereich unter Druck stehende Fluid ausbilden um den Dichtring 23 mit der Dichtkante 22 dichtend auf die Dichtfläche 7 zu drücken. Der Dichtring 23 kann insbesondere die Form eines flachen, bevorzugt in sich konkav verformten Kreisringes aufweisen, wobei die nach radial innen gerichtete Kante die Dichtkante 7 ausbildet.
Die Dichtringe 23 sind also nicht fest mit dem zugehörigen Anlagekörper 21 verbunden sondern liegen nur an. Es können dabei auch Zwischenräume vorhanden sein. Das Stützelement 20 ist ein von den Maschinenteilen 2,3 separates Bauteil. Die Dichtkante 22 der Dichtringe 23 ist jeweils an einem über das Stützelement 20 und den dazwischenliegenden Anlagekörper 21 in Richtung der Dichtfläche 7 hinausragenden Belastungsbereich des jeweiligen Dichtringes 23 angeordnet. Insbesondere dieser Belastungsbereich ist in seiner Lage bei Druckbeaufschlagung im Hochdruckbereich 10 variabel. Der Belastungsbereich verformt sich also bei Druckbeaufschlagung derart, dass die Dichtkante 22 an die Dichtfläche 7 gedrückt wird.
Die Dichtringe 23 werden durch den zugehörigen Anlagekörper 21 jeweils von der Dichtfläche 7 weg gedrückt. Letzeres ist durch Pfeile 25 in der Figur symbolisch dargestellt. Das Wegdrücken erfolgt durch die gummielastischen Eigenschaften der Anlagekörper 21. Die Dichtringe 23 weisen jeweils einen konkav zum Drehdurchführungsbereich 10 abgewinkelten Querschnitt auf. Der Drehdurchführungsbereich 10 wird dabei von den Dichtringen 23 und der Dichtfläche 7 derart eingegrenzt, dass zwischen den drehdurchführungsbereichseitigen Oberflächen der Dichtringe 23 und der Dichtfläche 7 jeweils ein stumpfer Winkel besteht. Die Anlagekörper 21 stützen sich gegen das jeweils zugehörige Stützelement 20 ab.
Wird ein unter Hochdruck P_{H} stehendes Fluid in den Drehdurchführungsbereich 10 eingeleitet, so wird, wie in der Figur durch gebogene Pfeile symbolisiert, eine Kraft auf die drehdurchführungsbereichseitigen Oberflächen der Dichtringe 23 ausgeübt. Diese Kraft führt zu einem Zusammendrücken der Anlagekörper 21 gegen deren den Dichtring 23 von der Dichtfläche 7 weg drückende innere gummielastische Stellkräfte. Dadurch werden die Dichtkanten 22 auf die Dichtfläche 7 gedrückt, so dass der Drehdurchführungsbereich 10 im Wesentlichen leckagefrei gegen den Niederdruckbereich 11 abgedichtet wird.

Bei der in Figur 1a dargestellten Dichtungsanordnung weisen die beiden Rotationsdichtungen 5 jeweils einen identischen radialen Durchmesser auf. Entsprechend hat auch die Dichtungsaufnahmestruktur in die die Rotationsdichtungen 5 montiert sind zu beiden Seiten der Bohrung 14 im feststehenden Maschinenteil 3 den gleichen Innendurchmesser.
In der Figur 1b weisen die beiden Rotationsdichtungen 5 jeweils einem unterschiedlichen radialen Durchmesser auf. Entsprechend bildet die Dichtungsaufnahmestruktur in die die Rotationsdichtungen 5 montiert sind zu beiden Seiten der Bohrung 14 im feststehenden Maschinenteil 3 einen unterschiedlichen Innendurchmesser aus, so dass eine Stufe 29 von dem Innendurchmesser ausgebildet ist.

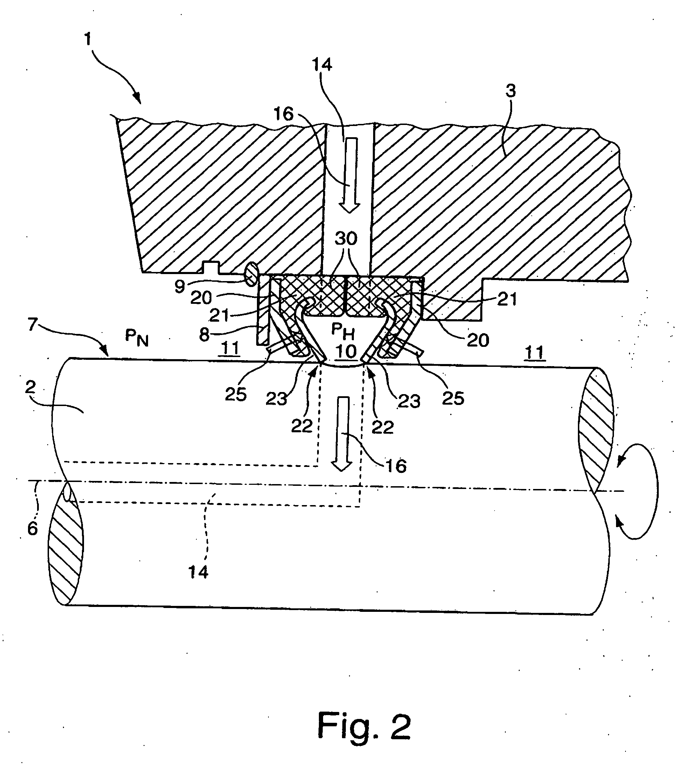

In Figur 2 ist eine weitere Ausführungsform einer erfindungsgemäßen Rotationsdichtungsanordnung an einer Drehdurchführung dargestellt. Die Rotationsdichtungsanordnung entspricht im Wesentlichen der in Figur 1a dargestellten Ausführungsform, weshalb die sich entsprechenden Merkmale mit gleichen Bezugszeichen bezeichnet sind. Im Unterschied zu der Ausführungsform aus Figur 1a bilden die Anlagekörper 21 der in Figur 2 dargesellten Rotationsdichtungen 5 jeweils in ihrem an die Bohrung 14 im feststehenden Maschinenteil 3 angrenzenden Bereich eine Wulst 30 aus. Die Wülste der Anlagekörper 21 berühren sich derart, dass sie die Funktion eines Rückschlagventiles aufweisen. Wenn durch die die Bohrung 14 im feststehenden Maschinenteil 3 ein Fluid unter Hochdruck in Richtung des Pfeiles 16 eingeleitet wird werden die Wülste auseinandergepresst, so dass das Fluid in den Hochdruckbereich 10 eingeleitet wird. Wenn der Druck des Fluids vermindert wird verschließen die Wülste 30 durch die elastischen Rückstellkräfte des gummielastischen Materials der Anlagekörper 21 die Bohrung 14 im feststehenden Maschinenteil 3 wieder.

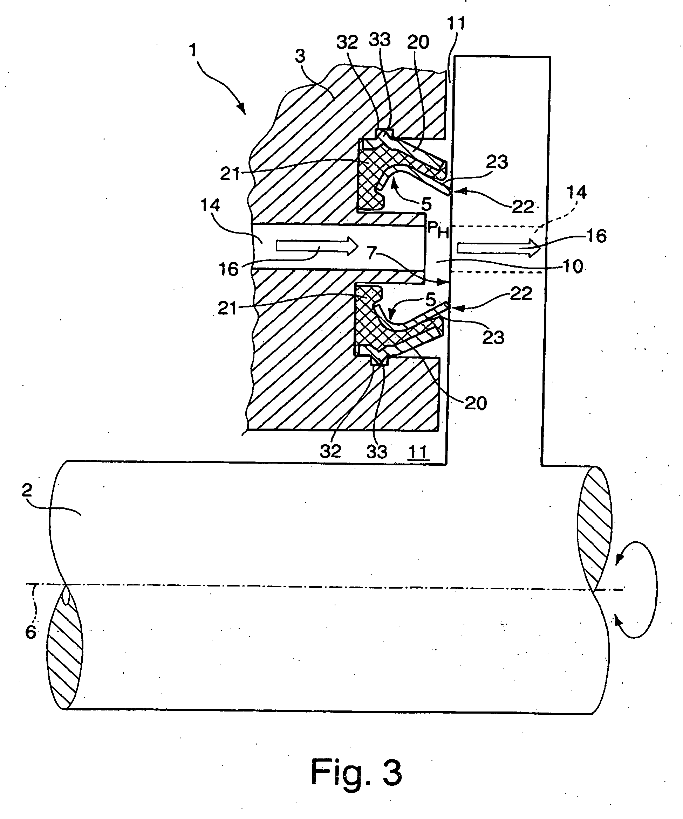

In Figur 3 ist eine Ausführungsform einer erfindungsgemäßen Rotationsdichtungsanordnung mit zwei Rotationsdichtungen 5 zur Abdichtung einer Drehdurchführung in einer Stirnseite eines rotierbar gelagerten Maschinenteils 2 dargestellt. Als Stirnseite wird eine Seite des rotierbaren Maschinenteils 2 bezeichnet auf deren Oberfläche die Rotationsachse des rotierbaren Maschinenteils 2, d.h. dessen Axialrichtung, senkrecht steht.
Dabei sind die der Rotationsdichtungsanordnung der Figur 1a entsprechenden Merkmale mit gleichen Bezugszeichen bezeichnet. Die Stirnseite des rotierenden Maschinenteils 2 bildet die Dichtfläche 7 aus und ist als eine Kreisringfläche ausgebildet. Die Anlagekörper 21 sind in radialer Richtung des rotierbar gelagerten Maschinenteils 2 zwischen dem jeweils zugehörigen Stützelement 20 und dem jeweiligen Dichtring 23 angeordnet. Das feststehende Maschinenteil 3 weist zu beiden Seiten einer als Fluidzuführung dienenden Bohrung 14 jeweils eine Ringnut als Dichtungsaufnahmestruktur auf, in die die Rotationsdichtungen 5 eingelegt sind. An den Bohrungsabgewandten Nutflanken der Nuten ist jeweils eine Kerbe 32 vorgesehen in die jeweils ein an den Stützelementen 20 vorgesehener Vorsprung 33 eingerastet ist, wodurch die Rotationsdichtungen 5 in ihrer Lage axial zu dem rotierenden Maschinenteil 2 fixiert sind.

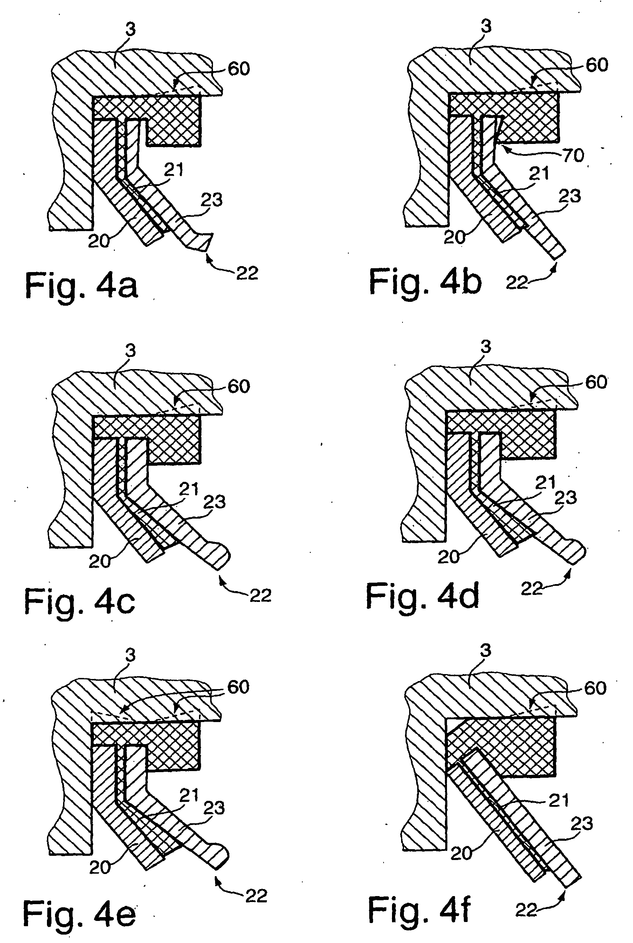

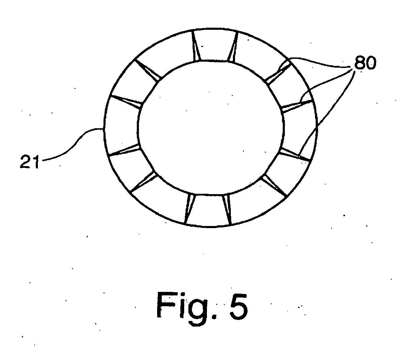

In den Figuren 4a bis 4f sind axiale Schnittbilder verschiedener Ausführungsformen von Rotationsdichtungen einer erfindungsgemäßen Rotationsdichtungsanordnung dargestellt. Die Ausführungsformen entsprechen im Wesentlichen der Rotationsdichtung gemäß Figur 1. Es wird deshalb im Folgenden lediglich auf spezielle Details eingegangen. In den Figuren sind der Figur 1 entsprechende Rotationsdichtungsanordnungsteile mit gleichen Bezugszeichen bezeichnet. Die Anlagekörper 21 der dargestellten Rotationsdichtungen weist jeweils dichtungsaufnahmestrukturseitig eine fußartige Verbreiterung auf. Der Anlagekörper erstreckt sich dabei in radialer Richtung der Rotationsdichtung 5 zwischen dem Dichtring 23 und der Dichtungsaufnahmestruktur und der Anlagekörper 21 weist einen sich hochdruckbereichseitig in axialer Richtung des rotierbar gelagerten Maschinenteils 2 an den Dichtring 23 anschließenden Bereich auf. Letzterer Bereich reicht unterschiedlich weit in Richtung Dichtkante. Derart ist der radial von der Dichtfläche abgewandte Rand des Dichtrings 23 in einer Ausnehmung des Anlagekörpers 21 angeordnet.
Die Anlagekörper 21 weisen jeweils dichtungsaufnahmeseitig mindestens ein spitz zulaufendes Ende 60 auf. Diese Enden 60 werden jeweils derart an die Dichtungsaufnahmestruktur gepresst, dass sich der Anlagekörper 21 elastisch verformt und dadurch eine Vorspannung des Dichtringes 23 erhalten wird. Letzteres ist durch die gestrichelte Darstellung der Enden 60 symbolisiert. Es wird dadurch auch jeweils der radial von der Dichtfläche abgewandte Rand des Dichtrings 23 elastisch in der Ausnehmung im Anlagekörper 21 eingeklemmt. In Figur 5b wird dadurch eine einen Abstand überbrückende Kante 70 ausgebildet. Die dargestellten Rotationsdichtungen unterscheiden sich weiter in der Ausformung der Stützelemente 20, der Dichtringe 23 und der dazwischen liegenden Bereiche der Anlagekörper 21.
In den Figuren 4a bis 4e weisen die Stützelemente 20, der Dichtringe 23 und der dazwischen liegenden Bereiche der Anlagekörper 21 jeweils einen konkav zum Hochdruckbereich abgewinkelten Querschnitt auf. Dabei ist in den Ausführungsbeispielen der Figuren 5c bis 5e der zwischen dem Stützelement 20 und dem Dichtring 23 angeordnete Bereich des Anlagekörpers 21 in Richtung Dichtkante konisch verbreitert. In Figur 5f ist der Querschnitt des Stützelements 20, des Dichtrings 23 und des dazwischen liegenden Bereichs des Anlagekörpers 21 dagegen nicht abgewinkelt.

Allen dargestellten Ausführungsformen ist gemein, dass eine radial in Richtung des nicht dargestellten zweiten Maschinenteils 2 gerichtete Vorspannung des Dichtrings 23 jeweils durch eine elastische Rückstellkraft des Anlagekörpers 21 vorhanden ist. Dadurch dass das Stützelement 20 jeweils zumindest in einem Abstützbereich schräg zur axialen Richtung des nicht dargestellten rotierbar gelagerten Maschinenteils verläuft wird der Anlägekörper 21 in diesem Bereich zwischen dem Stützelement 20 und dem Dichtring durch die genannte Vorspannung zusammengedrückt. Dadurch wird wiederum der Dichtring 23 in dem Abstützbereich durch den Anlagekörper 21 von der Dichtfläche weg gedrückt. Der Anlagekörper 21 ist dabei im Abstützbereich jeweils radial zischen dem jeweiligen Stützelement 20 und dem zugehörigen Dichtring 23 angeordnet.

In Figur 5 ist eine Ausführungsform eines Anlagekörpers 21 einer erfindungsgemäßen Rotationsdichtungsanordnung in einer axial gerichteten Draufsicht dargestellt. Es ist also die dichtungsringseitige Oberfläche des Anlagekörpers 21 gezeigt. Zwar kann der Anlagekörper auch eine dichtungsringseitig ebene Oberflächen aufweisen, in diesem Ausführungsbeispiel weist die Oberfläche jedoch Erhebungen 80 in Richtung des Dichtungsringes auf, so dass ein Abstand zwischen dem Anlagekörper 21 und dem Dichtungsring auch bei Kompression des Anlagekörpers 21 bestehen bleibt.

## Patentansprüche

1. Drehdurchführung mit
- einem rotierbar gelagerten Maschinenteil (2) und einem für das rotierbar gelagerte Maschinenteil (2) eine Lagerung ausbildenden Maschinenteil (3), wobei ein erstes der Maschinenteile (3) eine Dichtungsaufnahmestruktur ausbildet, und
das zweite der Maschinenteile (2) eine eine Dichtfläche (7) ausbildende Oberfläche aufweist, und
- mindestens einer in der Dichtungsaufnahmestruktur angeordneten Rotationsdichtung (5) zur Abdichtung eines als Drehdurchführungsbereich ausgebildeten Hochdruckbereichs (10) gegen einen Niederdruckbereich (11) zwischen den Maschinenteilen (2,3), wobei durch den Drehdurchführungsbereich ein gegenüber dem Niederdruckbereich (11) unter einem Überdruck stehendes Fluid von einem der Maschinenteile (2,3) durch die Dichtfläche (7) in das andere der Maschinenteile (2,3) einleitbar ist, wobei die Rotationsdichtung (5)
- ein im Wesentlichen steifes und im Wesentlichen lagestabil zum ersten Maschinenteil (3) angeordnetes Stützelement (20),
- einen gummielastisch verformbaren, sich an das Stützelement (20) hochdruckbereichseitig anschließenden Anlagekörper (21), und
- einen eine Dichtkante (22) aufweisenden und an den Anlagekörper (21) bevorzugt lose anliegenden Dichtring (23) aufweist, der aus PTFE gefertigt ist, wobei
der Dichtring (23) zu beiden Seiten der Dichtkante (22) jeweils eine Breitseite (24) aufweist und einen dichtkantenabgewandten Dichtungssitzkantenbereich (26) aufweist und die Breitseiten (24) über den Dichtungssitzkantenbereich (26) miteinander verbunden sind, wobei
der Anlagekörper (21) zumindest teilweise zwischen zumindest einer der Breitseiten (24) des Dichtringes (23) und dem Stützelement (20) angeordnet ist und wobei
das Stützelement (20) zumindest in einem Abstützbereich schräg zur axialen Richtung des rotierbar gelagerten Maschinenteils (2) verläuft und wobei der Anlagekörper so ausgeformt ist, dass der Dichtring (23) in dem Abstützbereich durch den Anlagekörper (21) von der Dichtfläche (7) weg gedrückt wird, so dass die Dichtkante (22) des Dichtrings (23) bei einem unter einem Schwellenwert liegenden Druck im Drehdurchführungsbereich ohne Anpresskraft an der Dichtfläche (7) anliegt oder von der Dichtfläche (7) beabstandet ist und der Dichtring (23) mit der Dichtkante (22) bei einem Druck über dem Schwellenwert gegen innere elastische Kräfte des Anlagekörpers (21) in Richtung der Dichtfläche (7) gedrückt wird und an dieser dichtend anliegt.

2. Drehdurchführung nach Anspruch 1,
**dadurch gekennzeichnet, dass**
die Dichtfläche (7) als eine Zylindermantelfläche ausgebildet ist und der Anlagekörper (21) zumindest teilweise in axialer Richtung des rotierbar gelagerten Maschinenteils (2) zwischen dem Stützelement (20) und dem Dichtring (23) angeordnet ist.

3. Drehdurchführung nach Anspruch 1,
**dadurch gekennzeichnet, dass**
die Dichtfläche (7) als eine Kreisfläche oder eine Kreisringfläche ausgebildet ist und der Anlagekörper (21) zumindest teilweise in radialer Richtung des rotierbar gelagerten Maschinenteils (2) zwischen dem Stützelement (20) und dem Dichtring (23) angeordnet ist.

4. Drehdurchführung nach einem der Ansprüche 1 bis 3,
**dadurch gekennzeichnet, dass**
das zweite Maschinenteil (2) als eine im ersten Maschinenteil (3) gelagerte Radialwelle ausgebildet ist, wobei die Rotationsdichtung (5) ringförmig ausgebildet ist und um die Radialwelle angeordnet ist.

5. Drehdurchführung nach einem der Ansprüche 1 bis 4,
**dadurch gekennzeichnet, dass**
das Stützelement (20) einstückig mit dem ersten Maschinenteil (3) als Teil der Dichtungsaufnahmestruktur ausgebildet ist.

6. Drehdurchführung nach einem der Ansprüche 1 bis 5,
**dadurch gekennzeichnet, dass**
der Anlagekörper (21) sich in radialer Richtung der Rotationsdichtung (5) zwischen dem Dichtring (23) und der Dichtungsaufnahmestruktur erstreckt, wobei eine radial in Richtung des zweiten Maschinenteils (2) gerichtete Vorspannung des Dichtrings (23) durch eine elastische Rückstellkraft des Anlagekörpers (21) vorhanden ist.

7. Drehdurchführung nach einem der Ansprüche 1 bis 6,
**dadurch gekennzeichnet, dass**
der Anlagekörper (21) einen sich hochdruckbereichseitig in axialer Richtung des rotierbar gelagerten Maschinenteils (2) an den Dichtring (23) anschließenden Bereich aufweist, derart dass der radial von der Dichtfläche abgewandte Rand des Dichtrings (23) in einer Ausnehmung des Anlagekörpers (21) angeordnet ist.

8. Drehdurchführung nach Anspruch 1,
**dadurch gekennzeichnet, dass**
der Dichtring (23) einen konkav zum Drehdurchführungsbereich (10) abgewinkelten Querschnitt aufweist.

9. Drehdurchführung nach einem der Ansprüche 1 bis 8,
**dadurch gekennzeichnet, dass**
das Stützelement (20) aus Stahl gefertigt ist und/oder der Anlagekörper (21) aus einem Elastomer gefertigt ist.

10. Drehdurchführung nach einem der Ansprüche 1 bis 9,
**dadurch gekennzeichnet, dass**
zwei Rotationsdichtungen (5) bevorzugt spiegelsymmetrisch um den Hochdruckbereich (10) herum angeordnet sind.

## Claims

1. Rotary feed-through with
- a rotatably mounted machine part (2) and a machine part (3) that forms a bearing for the rotatably mounted machine part (2), wherein a first of the machine parts (3) forms a seal-accommodating structure, and
the second of the machine parts (2) has a surface forming a sealing surface (7), and
- at least one rotary seal (5) arranged in the seal-accommodating structure, for sealing off a high-pressure area (10), configured as a rotary feed-through area, from a low-pressure area (11) between the machine parts (2,3), wherein, through the rotary feed-through area, a fluid that is under a positive pressure relative to the low-pressure area (11) can be introduced from one of the machine parts (2,3) through the sealing surface (7) into the other of the machine parts (2,3), wherein the rotary seal (5) has
- a support element (20) that is essentially rigid and positionally stable with respect to the first machine part (3),
- a rubber-elastically deformable contact body (21) in contact with the support element (20) on the high-pressure area side, and
- a sealing ring (23) made from PTFE and preferably loosely in contact with the contact body (21) and having a sealing edge (22), wherein the sealing ring (23) has a wide side (24) on each side of the sealing edge (22) and a seal seat edge area (26) facing away from a sealing edge and the wide sides (24) are interconnected via the seal seat edge area (26), wherein the contact body (21) is at least partially disposed between at least one of the wide sides (24) of the sealing ring (23) and the support element (20) and wherein the support element (20) extends, at least in a supporting area, obliquely with respect to the axial direction of the rotatably mounted machine part (2) and the contact body is shaped in such a manner that, in the supporting area, the sealing ring (23) is pressed away from the sealing surface (7) by the contact body (21), such that, in the event of a pressure lying below a threshold pressure, the sealing edge (22) of the sealing ring (23) seats in the rotary feed-through area without exerting a pressing load on the sealing surface (7) or such that the sealing edge (22) is separated from the sealing surface (7) and, in the event of a pressure exceeding the threshold pressure, the sealing ring (23) with the sealing edge (22) are pressed, in opposition to internal elastic forces of the contact body (21), towards the sealing surface (7) and the sealing edge (22) seats in a sealing manner thereon.

2. Rotary feed-through according to claim 1,
**characterized in that**
the sealing surface (7) is constituted as the lateral surface of a cylinder and the contact body (21) is disposed, at least partially in the axial direction of the rotatably mounted machine part (2), between the support element (20) and the sealing ring (23).

3. Rotary feed-through according to claim 1,
**characterized in that**
the sealing surface (7) is constituted as a circle area or a circular ring area and the contact body (21) is disposed, at least partially in the radial direction of the rotatably mounted machine part (2), between the support element (20) and the sealing ring (23).

4. Rotary feed-through according to any one of the claims 1 to 3,
**characterized in that**
the second machine part (2) is constituted as a radial shaft mounted in the first machine part (3), wherein the rotary seal (5) is ring-shaped and disposed around the radial shaft.

5. Rotary feed-through according to any one of the claims 1 to 4,
**characterized in that**
the support element (20) is constituted integrally with the first machine part (3) as part of the seal-accommodating structure.

6. Rotary feed-through according to any one of the claims 1 to 5,
**characterized in that**
the contact body (21) extends in the radial direction of the rotary seal (5) between the sealing ring (23) and the seal-accommodating structure, wherein the sealing ring (23) is pretensioned in the radial direction toward the second machine part (2) due to an elastic restoring force of the contact body (21).

7. Rotary feed-through according to any one of the claims 1 to 6,
**characterized in that**
the contact body (21) has an area in contact with the sealing ring (23) in the axial direction of the rotatably mounted machine part (2) on the high-pressure area side in such a way that the edge of the sealing ring (23) facing radially away from the sealing surface is disposed in a recess of the contact body (21).

8. Rotary feed-through according to claim 1,
**characterized in that**
the sealing ring (23) has a cross-section that is angled concavely with respect to the rotary feed-through area (10).

9. Rotary feed-through according to any one of the claims 1 to 8,
**characterized in that**
the support element (20) is made of steel and/or the contact body (21) is made of an elastomer.

10. Rotary feed-through according to any one of the claims 1 to 9,
**characterized in that**
two rotary seals (5) are preferably disposed mirror-symmetrically around the high-pressure area (10).

## Revendications

1. Passage tournant comprenant
- une partie de machine montée rotative (2) et une partie de machine (3) formant un palier pour la partie de machine montée rotative (2), une première des parties de machine (3) formant une structure réceptrice de joint d'étanchéité, et
la deuxième des parties de machine (2) présentant une surface formant une surface d'étanchéité (7), et
- au moins un joint d'étanchéité rotatif (5) disposé dans la structure réceptrice de joint d'étanchéité pour étanchéifier une zone de haute pression (10), réalisée sous la forme d'une zone de passage tournant, par rapport à une zone de basse pression (11) entre les pièces de machines (2,3), un fluide se trouvant sous surpression par rapport à la zone de basse pression (11) pouvant être introduit à travers la zone de passage tournant d'une des parties de machine (2, 3) dans l'autre des parties de machine (2, 3) à travers la surface d'étanchéité (7), le joint d'étanchéité rotatif (5) présentant
- un élément de support (20) sensiblement rigide et disposé sensiblement en position stable par rapport à la première partie de machine (3),
- un corps d'application (21) déformable élastiquement, se raccordant à l'élément de support (20) du côté de la zone de haute pression, et
- une bague d'étanchéité (23) présentant une arête d'étanchéité (22) et appliquée de préférence de façon lâche sur le corps d'application (21), laquelle est réalisée en PTFE,
la bague d'étanchéité (23) présentant de chaque côté de l'arête d'étanchéité (22) un côté large (24) et une zone d'arête de siège de joint d'étanchéité (26) éloignée de l'arête d'étanchéité et les côtés larges (24) étant reliés ensemble par la zone d'arête de siège de joint d'étanchéité (26),
le corps d'application (21) étant disposé au moins en partie entre au moins un des côtés larges (24) de la bague d'étanchéité (23) et l'élément de support (20) et l'élément de support (20) s'étendant au moins dans une zone d'appui obliquement par rapport à la direction axiale de la partie de machine montée rotative (2) et le corps d'application étant formé de façon que la bague d'étanchéité (23) soit écartée de la surface d'étanchéité (7) par le corps d'application (21) dans la zone d'appui, de sorte que, dans le cas d'une pression inférieure à une valeur seuil dans la zone de passage tournant, l'arête d'étanchéité (22) de la bague d'étanchéité (23) est appliquée sans force d'application sur la surface d'étanchéité (7) ou espacée de la surface d'étanchéité (7) et que, dans le cas d'une pression supérieure à la valeur seuil, la bague d'étanchéité (23) avec l'arête d'étanchéité (22) est pressée en direction de la surface d'étanchéité (7) contre les forces élastiques du corps d'application (21) et appliquée de manière étanche sur celle-ci.

2. Passage tournant selon la revendication 1,
**caractérisé en ce que**
la surface d'étanchéité (7) est réalisée sous la forme d'une surface extérieure cylindrique et le corps d'application (21) est disposé au moins en partie entre l'élément de support (20) et la bague d'étanchéité (23) dans la direction axiale de la partie de machine montée rotative (2).

3. Passage tournant selon la revendication 1,
**caractérisé en ce que**
la surface d'étanchéité (7) est réalisée sous la forme d'une surface circulaire ou d'une surface annulaire et le corps d'application (21) est disposé au moins en partie entre l'élément de support (20) et la bague d'étanchéité (23) dans la direction radiale de la partie de machine montée rotative (2).

4. Passage tournant selon l'une des revendications 1 à 3,
**caractérisé en ce que**
la deuxième partie de machine (2) est réalisée sous la forme d'un arbre radial monté dans la première partie de machine (3), le joint d'étanchéité rotatif (5) étant réalisé en forme d'anneau et disposé autour de l'arbre radial.

5. Passage tournant selon l'une des revendications 1 à 4,
**caractérisé en ce que**
l'élément de support (20) est réalisé d'une seule pièce avec la première partie de machine (3) en tant que partie de la structure réceptrice de joint d'étanchéité.

6. Passage tournant selon l'une des revendications 1 à 5,
**caractérisé en ce que**
le corps d'application (21) s'étend entre la bague d'étanchéité (23) et la structure réceptrice de joint d'étanchéité dans la direction radiale du joint d'étanchéité rotatif (5), une précontrainte de la bague d'étanchéité (23) par une force de rappel élastique du corps d'application (21), dirigée radialement dans la direction de la deuxième partie de machine (2), étant présente.

7. Passage tournant selon l'une des revendications 1 à 6,
**caractérisé en ce que**
le corps d'application (21) présente une zone se raccordant à la bague d'étanchéité (23) dans la direction axiale de la partie de machine montée rotative (2) du côté de la zone de haute pression, de façon que le bord de la bague d'étanchéité (23) éloigné radialement de la surface d'étanchéité soit disposé dans un évidement du corps d'application (21).

8. Passage tournant selon la revendication 1,
**caractérisé en ce que**
la bague d'étanchéité (23) présente une section transversale coudée de manière concave vers la zone de passage tournant (10).

9. Passage tournant selon l'une des revendications 1 à 8,
**caractérisé en ce que**
l'élément de support (20) est réalisé en acier et/ou le corps d'application (21) dans un matériau élastomère.

10. Passage tournant selon l'une des revendications 1 à 9,
**caractérisé en ce que**
deux joints d'étanchéité rotatifs (5) sont disposés de préférence symétriquement autour de la zone de haute pression (10).
